# NEW EUROPEAN PATENT SPECIFICATION

(11) **EP 0 846 936 B2**
(45) Date of publication and mention of the opposition decision: **08.07.2015**
(45) Mention of the grant of the patent: 04.07.2007
(21) Application number: 97610055.2
(22) Date of filing: 05.12.1997
(51) Int. Cl.: G01F 1/66

(54) **A flow meter and a method of operating a flow meter**
Durchflussmesser und Verfahren zum Betreiben eines Durchflussmessers
Débitmètre et procédé pour faire opérer un débitmètre

(30) Priority: 05.12.1996 EP 96610047
(43) Date of publication of application: 10.06.1998
(60) Divisional application: 07111533.1
(73) Proprietor: KAMSTRUP A/S, 8660 Skanderborg (DK)
(72) Inventor: Nielsen, Soren Tonnes, 8355 Solbjerg (DK)
(74) Representative: Stolmár & Partner Patentanwälte PartG mbB

(56) References cited:
- EP-A- 0 441 531
- EP-A2- 0 441 531
- WO-A-90/00723
- WO-A-94/04890
- DE-A1- 2 724 661
- DE-A1- 19 530 054
- DE-C1- 4 400 448
- DE-U1- 9 390 174
- US-A- 4 052 896
- US-A- 4 052 896
- US-A- 4 227 407
- 'Medical Electronics', vol. 15, part 2 April 1984 deel R.G. BURTON ET AL, pages 68 - 73

## Description

The present invention relates to flow meters and to methods of operating flow meters.

Ultrasonic flow meters for measuring the flow of a liquid or gas in e. g. a flow path have been known for many years. Examples of such flow meters may be seen in EP-B-O 397 596, GB-A-2 079 939, WO 90/00723, EP-B-0 498 141, DE-A-38 23 177, EP-A-0 441 531 and WO 94/04890.

Typical flow meters of this type operate by transmitting ultrasound signals through a flow of a liquid or a gas in a flow passage or path in the upstream and the downstream directions, respectively, and by subsequently determining the flow value on the basis of the difference in transmission velocity of the ultrasound signals in the two directions caused by the flow.

In order to be able to determine the quite small difference in transmission velocity of the two signals, the signals are typically transmitted in the fluid at the same time. The advantage of this choice is the fact that the detection time difference may be detected as a phase difference between the two signals. In this situation, both transmitters firstly act as transmitters and subsequently as receivers.

However, this choice causes the problem that ultrasound signals reflected from e. g. adjacent flow passage walls may reach the transducer from which they were transmitted at the same time as the signals transmitted by the other transducer. This will give reception problems, as the two signals now interfere.

In order to prevent this problem, the signals in the two directions may be transmitted at different times so that the ultrasound waves generated by one transducer are allowed to e. g. die out before that transducer is to act as receiver.

Therefore, according to the invention, the signal transmitted in the first direction is generated and detected before the signal in the opposite direction is transmitted.

However, this requires the use of a new measuring setup, as the two signals can now no longer be received simultaneously, whereby the above-mentioned method using the phase difference between the two signals may not be used.

In WO 90/00723, a solution is suggested wherein a phase difference is instead determined between the signal transmitted to the transmitting transducer and the signal received by the receiving transducer. On the basis of the phase differences in the two directions, a flow value is determined. However, using this method, the dynamic range of the flow meter is reduced due to the fact that the total dynamic area of the meter is limited by the interval of phase differences that may be determined. This interval is 2n minus the maximum phase differences possible between the transmitting signal and the received signals in the two directions. However, in this setup, as variations in temperature cause variations in the velocity of ultrasound signals in the medium, part of the phase difference will be due to temperature variations. This therefore reduces the useful phase difference, and thus the dynamic area, of this instrument.

This problem is solved by the present invention.

Another problem encountered in prior art flow meters is the fact that in order to obtain similar measurements with the two transducers, a great effort is made to have the detecting electronics related to these two transducers be as identical as possible. This problem is solved in e. g. EP-B-0 397 596 and WO 90/00723 where the same circuits are used. However, in these setups, other problems occur due to the positioning of the electrical switches.

In order to have the impedances of the circuits identical, the setups in EP-B-0 397 596 and WO 90/00723 require the transmitting and the receiving circuits to have identical impedances. In order to obviate this demand, a different solution has been devised relating to a flow meter according to claim 1 for measuring a medium flow through a flow passage defined therein and comprising
- at least two ultrasound generating means for generating ultrasound signals based on input signals supplied thereto, for directing such signals in substantially opposite directions along at least part of the flow passage, and for receiving ultrasonic signals having passed said part of the flow passage and generating related electrical signals,
- generator means having an output for outputting input signals for the ultrasound generating means,
- first means for transmitting the input signals from the output of the generator means to the ultrasound generating means,
- deriving means for deriving values or signals based on the related electrical signals, the deriving means having an input arranged to receive the related electrical signals,
- calculating or determining means being adapted to calculate or determine, based on derived values or signals, a flow rate of the medium flowing through the flow passage, and
- second means for transmitting the related electrical signals from the ultrasound generating means to the input of the calculating or determining means,
wherein the first and the second transmitting means comprise:
- at least one first electrical conductor means interconnecting the output of the generator means and the input of the deriving means,
- second electrical conductor means for electrically interconnecting each ultrasound generating means to at least one of the first electrical conductor means, and
- for each ultrasound generating means, at least one switching means for enabling or preventing electrical current flow between the at least one first electrical conductor means and the actual ultrasound generating means through the second electrical conductor means electrically interconnecting the actual ultrasound generating means to the at least one of the first electrical conductor means,
   characterized in that
   - the generator means comprises:
      - a frequency oscillator for generating the input signals,
      - a microprocessor for generating a start/stop signal,
      - a NOR gate for switching the input signals output from the frequency oscillator on and off,
      - a high-pass filter for removing any DC-component from the input signals output from the NOR gate, and
      - a resistor for transmitting the input signals from the high-pass filter to the output, and
   - the generator means are adapted to be switched on and off without altering an output impedance thereof.

Using a setup of this type, the impedance seen from the transducer is the same independently of whether the transducer acts as transmitter or receiver. In this manner, no demands are put on the receiving and the transmitting circuits in relation to the output and input impedances thereof.

Preferably, the at least one electrical switch is comprised in the second electrical conductor means in order to generate or prevent electrical interconnection between the respective ultrasound generating means and the at least one first electrical conductor means. However, it should be noted that a current flow is also prevented if the switching means provide or prevent current flow to the transducer from the side thereof opposite to the second electrical conductor means.

The frequency of the input signals may, naturally, be at least 200 kHz, such as at least 500 kHz, preferably on the order of 1 MHz.

In the present context, the opposite directions are typically two opposite directions. However, also e. g. a triangular setup may be used, wherein three directions, such as three directions forming a equilateral triangle, is contemplated.

The generator means are adapted to be switched on and off without altering an output impedance thereof. If the generator means were to generate signals during reception of a signal having passed the flow path, the signal from the generator may interfere therewith.

In order to also obtain additional advantages, the flow meter preferably also comprises:
- means for generating a first reference signal,
- means for generating a second reference signal,
   the deriving means comprising:
- means for deriving a first derived value or signal on the basis of the first reference signal and a first electrical signal generated by the receiving means and being related to an ultrasonic signal, which is based on a first input signal and which is transmitted subsequent to the generation of the first electrical signal and in a first of the substantially opposite directions along the flow passage, and
- means for deriving a second derived value or signal on the basis of the second reference signal and a second electrical signal generated by the receiving means and being related to an ultrasonic signal, which is based on a second input signal and which is transmitted in a second of the substantially opposite directions along the flow path, the second direction being substantially opposite the first direction,
where calculating or determining means are adapted to calculate or determine a flow rate of the medium flowing through the flow passage, based on the first and second derived values or signals and based on a known relationship between the frequencies and/or phases of the first and second references and/or based on a known relationship between the frequencies and/or phases of the first and second input signals.

Also, the flow meter preferably comprises means for deriving each of the first and second reference signals and/or each of the first or second input signals on the basis of one or more of the electrical signals generated by the receiving means and related to ultrasonic signals transmitted in one or more of the substantially opposite directions along the flow path.

Thus, instead of using the input signal for the transducers as a reference signal, other reference signals are provided. In this situation, the reference signals may be provided with a lower maximum possible phase difference to the electrical signal, or the input signals may be altered to that this phase difference is lower. In addition, two reference signals may be provided: one for each direction.

In the present context, the phase difference between two signals not present at the point in time in question will mean the phase difference therebetween at the point in time if both signals were maintained or extrapolated in time without altered frequency and phase at least to the actual point in time.

According to this aspect of the invention, the maximum loss of dynamic area may be reduced by e. g. adapting either the input signals to fixed reference signals or by adapting the reference signals to fixed input signals.

It should be noted that it may be advantageous to perform the measurements in the different directions with ultrasound signals having different frequencies. This may be performed using the same transducers or different transducers depending on whether this change of frequency will cause problems in the use of the same transducers.

Naturally, the two reference signals may be identical, as long as either they or the input signals are derived on the basis of one or more of the electrical signals generated by the receiving means.

The means for generating the first reference signal may be adapted to generate either the first reference signal with a frequency being an integer times a frequency of the second reference signal, or to generate the second reference signal with a frequency being an integer times a frequency of the first reference signal.

Alternatively, the means for generating the first and second reference signals may be adapted to generate the first and the second reference signals with substantially identical frequencies, such as with a known phase difference.

The means for generating the first and second reference signals may be adapted to generate substantially identical first and second reference signals.

As is usual in the art, the ultrasound generating means are preferably adapted to generate ultrasound signals as a response to an input signal where the frequency of the ultrasound signal is substantially equal to a frequency of the input signal. In this situation, the flow meter preferably also comprises means for generating input signals for the ultrasound generating means. These means may be adapted to alternately generate input signals for the individual ultrasound generating means.

In order to be able to utilize a phase difference measurement, the means for generating the first reference signal are preferably adapted to generate the first reference signal having a frequency substantially equal to a frequency of the first electrical signal, and the means for generating the second reference signal are preferably adapted to generate the second reference signal having a frequency substantially equal to a frequency of the second electrical signal.

In this situation the means for deriving the first and the second derived value or signal are preferably adapted to generate a first derived value or signal relating to a phase difference between the first electrical signal and the first reference signal and a second derived value or signal relating to a phase difference between the second electrical signal and the second reference signal, so that the calculating or determining means may be adapted to calculate or determine a measured flow rate value of the medium in the flow passage by subtracting the first and the second derived values or signals and multiplying a resulting value by a pre-determined parameter.

In addition, the flow meter may comprise means for providing one or more candidate signals having substantially the same frequency or having a number of different frequencies, such as a number of candidate signals having substantially the same frequency, at least part of which have different phases.

These candidate signals are candidates for the reference signals. The advantage by this feature is the fact that the reference signals need not actually be generated, merely selected from the candidate signals. In that situation, the means for generating the first reference signal may be adapted to generate the first reference signal by selecting one of the candidate signals.

As described above, one object of the invention is the reduction of the "waste time" and the following increase of the dynamic area of the instrument by reducing the maximum phase difference between the received signal and the reference signal. Therefore, the means for generating the first reference signal are preferably adapted to select a generated or received candidate signal having a phase corresponding to that of the first electrical signal.

In the present context, a phase "corresponding to" may mean that phase being the closest to the phase of the first electrical signal, that being the least delayed in relation to the first electrical signal, or the one in relation to which the first electrical signal is the least delayed.

A number of signal shapes may be used in flow meters of the present type. Thus, in one example, the means for generating the input signals, the means for generating the reference signals and the means for providing the candidate signals may comprise means for generating or providing square wave signals alternately shifting between their lower value and their higher value.

In this situation, the means for generating the first reference signal may be adapted to select that of the candidate signals which, starting at a point in time where the first electrical signal shifts from its lower value to its higher value, is the next of the candidate signals to shift from its lower value to its higher value.

In another example, the means for generating the input signals, the means for generating the reference signals and the means for providing the candidate signals may comprise means for generating or providing signals having well-defined maxima and minima and alternately shifting therebetween.

In that situation, the means for generating the first reference signal may be adapted to select that of the candidate signals which, starting at a point in time wherein the first electrical signal attains a maximum or a minimum, is the next of the candidate signals to attain its maximum or minimum.

Instead of or in addition to generating or providing a number of candidate signals, the flow meter may comprise means for providing a high frequency signal having a frequency substantially higher than that of the first electrical signal, and the means for generating the first reference signal may be adapted to generate the first reference signal on the basis of the high frequency signal.

In this situation, the means for providing the high frequency signal may be adapted to provide a high frequency signal having a frequency being substantially an integer times a frequency of the first electrical signal, and the means for generating the first reference signal may comprise a frequency division means for receiving the high frequency signal and for outputting the first reference signal having a frequency substantially equal to that of the first electrical signal.

Again, in a first example the means for generating the input signals, the means for generating the reference signals and the means for providing the high frequency signal may be adapted to generate or provide square wave signals alternately shifting between their lower value and their higher value.

If the frequency dividing means are adapted to generate not only a single signal but a number of candidate signals from the high frequency signal, the means for generating the first and the second reference signals may comprise means for selecting that of the candidate signals which, starting at a point in time where the first electrical signal shifts from its lower value to its higher value, is the next of the candidate signals to shift from its lower value to its higher value or vice versa.

In another example, the means for generating the input signals, the means for generating the reference signals and the means for providing the high frequency signal comprise means for generating or providing signals having well-defined maxima and minima and alternately shifting therebetween.

Naturally, the frequency dividing means may be adapted to generate not only a single signal but a number of candidate signals from the high frequency signal.

In the other example, the means for generating the first and the second reference signals may be adapted to select that of the candidate signals which, starting at a given point in time wherein the first electrical signal attains a maximum or a minimum, is the next of the candidate signals to attain its maximum or minimum or vice versa.

At least one of the ultrasound generating means preferably comprises:
- an input for receiving input signals,
- an ultrasound generating element, such as a piezoelectric element, for receiving the input signals and for generating ultrasonic signals accordingly,
- means for transferring the input signals from the input to the ultrasound generating element, the transferring means comprising a resilient conducting element, such as a spring, being biased against the ultrasound generating element for providing electrical contact between the input and the ultrasound generating element.

One of the advantages of this embodiment is the fact that the typical soldering spots of the electrical interconnections to the ultrasound generating element are required to be both small and strong. It should be remembered that this element typically vibrates at a frequency on the order of 1 MHz and that a too large soldering spot may affect the vibration thereof. Therefore, providing this biassing without providing the ultrasound generating element with additional weight provides a more advantageous transducer.

In a second aspect, the invention relates to a method according to claim 17 of operating the flow meter of the first aspect of the invention wherein the generator means are adapted to be switched on and of without to any substantial degree altering an output impedance thereof. This method comprises:
(1) - switching on the generator means,
(2) - opening the second switching means and closing the first switching means so as to generate, using the first ultrasound generating means, a first ultrasonic signal propagating in a first direction along the flow passage,
(3) - switching the generating means off, opening the first switching means, and closing the second switching means,
(4) - receiving, using the second ultrasound generating means, the first ultrasonic signal having passed said part of the flow passage and generating a first related electrical signal,
(5) - transmitting the generated first related electrical signal to the deriving means,
(6) - deriving in the deriving means a first derived value or signal relating to the generated first related electrical signal,
(7) - switching on the generator means,
(8) - opening the first switching means and closing the second switching means so as to generate, using the second ultrasound generating means, a second ultrasonic signal propagating in a second direction along the flow passage, the second direction being substantially opposite the first direction,
(9) - switching the generating means off, opening the second switching means, and closing the first switching means,
(10) - receiving, using the first ultrasound generating means, the second ultrasonic signal having passed said part of the flow passage and generating a second related electrical signal,
(11) - transmitting the generated second related electrical signal to the deriving means,
(12) - deriving in the deriving means a second derived value or signal relating to the generated second related electrical signal,
(13) - calculating or determining, based on the first and second derived values or signals and using the calculating or determining means, a flow rate of the medium flowing through the flow passage.

In order to obtain additional advantages, the method preferably further comprises:
- before step (6), generating a first reference signal,
- the deriving step (6) comprising comparing the first electrical signal and the first reference signal and deriving a first derived value or signal from the comparison,
- before step (12), generating a second reference signal,
- the deriving step (12) comprising comparing the second electrical signal and the second reference signal and determining a second derived value or signal from the comparison,
- the calculating or determining step (13) comprising calculating or determining a measured flow rate value of the medium in the flow passage from the first and the second derived values or signals and from a known relation between a frequency and/or phase of the first and second reference signals and/or from a known relation between a frequency and/or phase of the first and second reference signals.

As described above, the first reference signal may have a frequency being an integer times that of the second reference signal, the second reference signal may have a frequency being an integer times that of the first reference signal, or the first and the second reference signals may have substantially equal frequencies. In the last situation, a phase difference between the first and second reference signals is preferably known. Preferably, the first and second reference signals are substantially identical.

Usually, each ultrasound generating means generates ultrasound signals as a response to an input signal and wherein a frequency of the ultrasound signal corresponds to a frequency of the input signal.

Typically, the input signals for the individual ultrasound generating means are generated alternately.

In order to be able to use a phase difference detection method, the first reference signal is preferably generated having a frequency substantially equal to a frequency of the first electrical signal, and the second reference signal is preferably generated having a frequency substantially equal to a frequency of the second electrical signal.

In that situation, the first derived value or signal preferably relates to a phase difference between the first electrical signal and the first reference value, and the second derived value or signal preferably relates to a phase difference between the second electrical signal and the second reference value.

In that situation, the measured flow rate value of the medium in the flow passage may be calculated or determined by subtracting the first and second derived values or signals and multiplying a resulting value by a pre-determined parameter.

As described above, one or more candidate signals may be provided having substantially the same frequency or a number of different frequencies. A number of the candidate signals may have substantially the same frequency and of which at least some have different phases.

Then, the first reference signal may be selected as one of the received candidate signals, such as the candidate signal having a phase and a frequency corresponding to those of the first electrical signal.

In one example, the input signals, the reference signals and the candidate signals substantially are square wave signals alternatively shifting between their lower value and their higher value.

In that example, the selected candidate signal may be that which, starting at a point in time where the first electrical signal shifts from its lower value to its higher value, is the next of the candidate signals to shift from its lower value to its higher value or vice versa.

In another example, the input signals, the reference signals and the candidate signals may have well-defined maxima and minima and alternately shift therebetween, whereby the selected candidate signal may be that which, starting at a point in time wherein the first electrical signal attains a maximum or a minimum, is the next of the candidate signals to attain its maximum or minimum or vice versa.

In addition to or alternatively to the providing of the candidate signals, a high frequency signal may be provided having a frequency substantially higher than that of the first electrical signal, and the first reference signal may be generated on the basis of the high frequency signal.

Thus, the high frequency signal may have a high frequency being substantially an integer times that of the first electrical signal, and the first reference signal may be generated by frequency division of the high frequency signal.

In a first example, the input signals, the reference signals and the high frequency signal may be substantially square wave signals alternately shifting between their lower value and their higher value.

In fact, it may be desired that a number of candidate signals may be generated from the high frequency signal.

In the first example, the selected candidate signal may be that which, starting at a point in time where the first electrical signal shifts from its lower value to its higher value, is the next of the candidate signals to shift from its lower value to its higher value or vice versa.

In another example, the input signals, the reference signals and the high frequency signal may have well-defined maxima and minima and alternately shift therebetween.

A number of candidate signals may be generated from the high frequency signal, and the selected candidate signal may be that which, starting at a point in time wherein the first electrical signal attains a maximum or a minimum, is the next of the candidate signals to attain its maximum or minimum or vice versa.

In the following, a preferred embodiment of a flow meter incorporating both aspects of the invention will be described with reference to the appended drawing, wherein
- Fig. 1 illustrates, in the form of a block diagram, the electronic setup of the preferred flow meter and
- Fig. 2 is a cross-sectional view through a preferred transducer for use in the present invention.

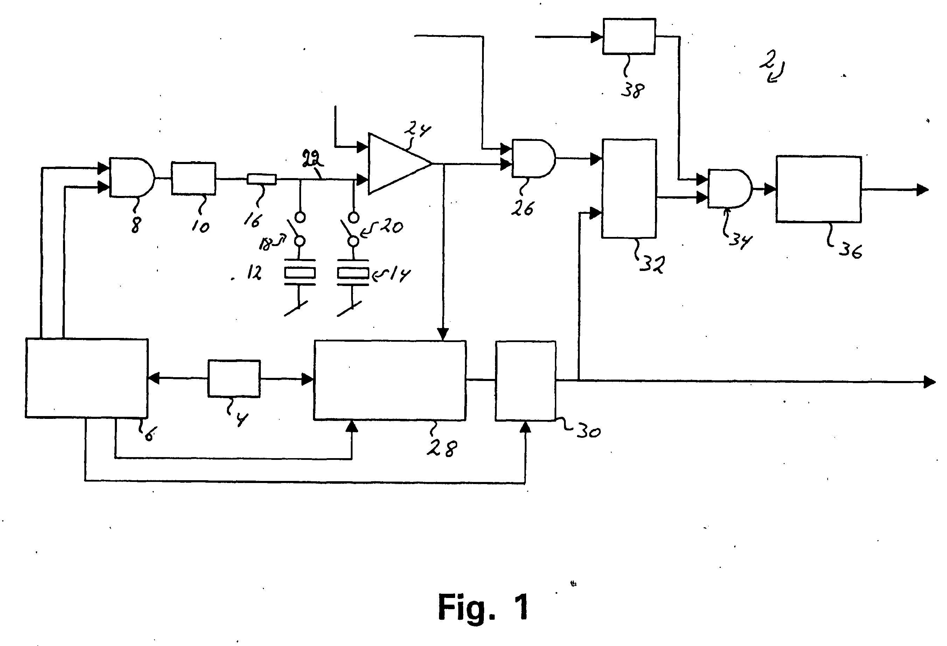

In Fig. 1, the flow meter 2 comprises a high frequency oscillator 4 generating a 4 MHz square wave signal which is fed into a microprocessor 6. In the microprocessor 6, the high frequency signal is frequency divided into a 1 MHz signal which is transferred to one of the two inputs of a NOR gate 8. In addition to the 1 MHz signal, the microprocessor also generates a start/stop signal fed into the other input of the gate 8 so as to control the output of the gate 8. When the start/stop signal is low, the 1 MHz signal is transferred through the gate 8 to a high pass filter 10, which removes any DC-component output from the gate 8.

When the start/stop signal from the microprocessor is high, the gate 8 will output a constant, low signal, and thereby block the 1 MHz signal.

In order to generate the ultrasound signals and to receive these in the flow passage (not illustrated), two ultrasound transducers 12 and 14 are positioned in the flow passage (not illustrated) in a manner so that they are able to generate ultrasound signals directly towards each other. In addition, the transducers 12 and 14 are able to function as ultrasound receivers. Transducers of this type have long been known in the prior art.

Before feeding the output of the high pass filter 10 into one of the transducers 12 or 14, the signal is transmitted through a resistor 16. Switches 18 and 20 are controlled by the microprocessor 6, whereby it may be selected which of the transducers 12 or 14 should receive the signal output from the resistor 16 and thereby act as a transmitter of ultrasound signals.

In the present embodiment, the switches 18 and 20 will be operated in a manner so that only one transducer 12 or 14 will act as a transmitter at a given point in time. As described above, this will reduce or totally remove the problem caused by reflections of ultrasound signals emitted from the transducer and reflected in the vicinity thereof so as to return when the same transducer is to act as a receiver.

The switches 18 and 20 are operated in a manner so that only one, 18 or 20, is closed at a time, so that the corresponding transducer 12 or 14, respectively, will act as an ultrasound generator when receiving a signal emitted from the resistor 16.

Having launched, using the transducer 12, ultrasound signals into the flow passage (not illustrated), the switch 18, which is closed during generation of the ultrasound signals, will be opened and the other switch 20 will be closed in time before the ultrasound signals are received by the other transducer 14 - and vice versa. Corresponding electrical signals generated by the transducer 14 are subsequently transferred through the closed switch 20 to an electrical conductor 22 interconnecting the generator means (constituted by the oscillator 4, the microprocessor 6, the gate 8, the filter 10 and the resistor 16) to an electronic circuit means adapted to receive the electrical signals and to eventually calculate or determine a measured flow value of the medium in the flow passage (not illustrated).

In the present embodiment, the received electrical signal generated by the transducer receiving the ultrasound signals are input to an input of a phase detector 32 for detecting the phase difference between the received electrical signal and a reference signal input on another input of the phase detector 32.

In addition, the received signals are fed into a synchronizing circuit 28 which also receives the 4 MHz square wave signal from the oscillator 4 and a start/stop signal from the microprocessor 6. The operation of the circuit 28 is to generate, from the 4 MHz signal, a 1 MHz signal (by frequency division) corresponding to that of the 1 MHz signals derivable from the 4 MHz signal having a phase corresponding the best to the received 1 MHz signal output from the receiving transducer 12 or 14.

In the present embodiment, the frequency division performed in the circuit 28 is synchronized by selecting the first low-to-high flange of the 4 MHz signal following a low-to-high flange of the received signal. Having determined which flange portions of the 4 MHz signal should correspond to flange portions of the desired 1 MHz reference signal, standard frequency division may be utilized. The then following frequency division is easily performed, as the flanges of the 4 MHz signal may be used for determining those of the 1 MHz signal. Generation of the resulting 1 MHz signal may be provided with quite simple electronic digital gates.

Actual selection of these flange portions and thereby the synchronization of the circuit 28 is performed by the microprocessor 6.

The 1 MHz reference signal generated by the circuit 28 is transferred to a controlling circuit 30 also receiving a signal from the microprocessor 6. The signal from the processor 6 relates to the number of pulses to be used in the phase detector circuit 32 when detecting the phase difference between the 1 MHz reference signal generated in the circuit 28 and the signal received.

The circuit 30 provides a reset signal for the phase detector 32 for resetting the phase detector 32 when the desired number of pulses have been used in the detector 32.

A preferred measurement of a flow of a medium is conducted as follows:

In order to determine the reference signal to be used in two standard measurements (one signal with ultrasonic signals travelling downstream and one with ultrasound signals travelling upstream), a first measurement is performed where the microprocessor 6 starts frequency dividing the 4 MHz signal from the oscillator 4 and transmits the 1 MHz signal to the NOR gate 8. Subsequently, the start/stop signal also transmitted from the microprocessor 6 to the NOR gate 8 is shifted from high to low so that the 1 MHz signal from the microprocessor 6 is transmitted through the gate 8, the filter 10 and the resistor 16 to the transducer 12 positioned downstream in the flow passage (not illustrated) in relation to the transducer 14. Naturally, the switch 18 is closed in order to have the transducer 14 output the ultrasound signal. A small period of time later, but before the ultrasound signal has reached the transducer 14, the gate 8 is set to block the signal from the microprocessor 6, the microprocessor 6 stops dividing the signal from the generator 4, the switch 18 is opened and the switch 20 is closed in order to have the transducer 14 act as a receiver. The received signal generated by the transducer 14 when receiving the ultrasound signal is transmitted to the electrical conductor 22 and to an input of the phase detector 32. Simultaneously, the electrical signal is transmitted via the electrical conductor 22 to the synchronizing circuit 28 in which the above-described determination and generation of the reference signal is performed. Subsequently, the generation of the reference signal is maintained for use in the following two "real" measurements.

It should be noted that the results from the phase detector 32, pulse amplifier 36 and the microprocessor 6 are not used in this connection, as there is not performed any measurement.

Subsequent to this preliminary measurement, the two standard measurements may be performed in which the transducers 12 and 14 alternately receive the 1 MHz signal through the gate 8, the filter 10 and the resistor 16 and where the other transducer 14 or 12 receives the signal, transmits it to the phase detector 32, and where the microprocessor 6 simultaneously instructs the circuit 30 to transmit a predetermined number of pulses, such as 12 pulses, of the reference signal generated in the circuit 28 to the phase detector 32 and information relating to this number of pulses to the microprocessor (not illustrated).

In the phase detector 32, the 12 pulses from the circuit 30 are correlated with the same number of pulses in the received signal from the electrical conductor 22, and the phase detector 32 outputs 12 pulses, each corresponding to the phase difference between each of the corresponding pulses of the reference signal and of the received signal. The pulses generated by the phase detector 32 are transmitted to the pulse amplifier 36, such as that described in Danish utility model No. 9400101, wherein a single pulse is generated having a width being 1000 times the accumulated width of the twelve pulses generated by the phase detector 32. This resulting pulse is transferred to the microprocessor 6 for the final determination of the flow of the medium.

Subsequent to this measurement, the microprocessor 6 again starts frequency dividing the signal from the oscillator 4 and the gate 8 is instructed to again transmit the signal through the filter 10, the resistor 16 and this time to the transducer 14 through the closed switch 20. As described before, the switches again shift, the microprocessor 6 stops frequency dividing, the gate 8 is instructed to block any signals, the transducer 12 now acts as receiver, and, eventually, the pulse amplifier 36 generates a new pulse again being thousand times wider than the accumulated width of the twelve pulses generated by the phase detector 32.

In the microprocessor 6, the width of the two pulses generated by the pulse amplifier 36 are determined and subtracted. The result of this subtraction is a measure directly relating to the transmission time difference between the two ultrasound signals travelling in the medium, and thus to the velocity of the flow of the medium. Knowing the dimensions of the flow passage, such as e. g. a tube in which the medium flows, standard mathematics will result in a measure of the flow of the medium.

In this calculation, naturally, information relating to the number of pulses used in the phase detector 32 and the pulse amplifier 36 is required in order to obtain a correct value of the flow. As described above, this information is provided by the circuit 30 and transmitted to the microprocessor 6.

As the signals output from the receiving transducer is not a square signal but more like a sine-like signal, a comparator 24 is preferably introduced for generating a square signal from the sine-like signal. The comparator 24 receives a reference voltage defining the boundary between the lower and the higher values of the square signal. Preferably, this reference voltage is 0.

In order to be able to calibrate the present system, it is presently preferred to introduce, in the receiving means via an adder 26, a single pulse having a predetermined width. Transmitting this pulse through the phase detector 32 and the pulse amplifier 36 would result in a pulse having a given width. On the basis of the relationship between the predetermined width and the resulting width of the pulse from the pulse amplifier 36, the system may be calibrated.

It should be noted that the use of the calibration pulse and the electrical element 26 are not crucial to the operation of the present instrument. In order to merely perform measurements of flow values, the electrical conductor may be introduced directly into an input on the detector 32.

As it is well-known, the temperature of the flowmeter and of the medium interacts strongly with measurements of this type. Therefore, it is presently preferred to also use at least part of this flowmeter for performing temperature measurements. At present, a temperature measurement is performed using a temperature sensor 38 comprising a PTC-resistor (not shown) having a positive temperature characteristic (i.e. a resistance increasing for increasing temperature) and a capacitor (not shown). Generating a square pulse over the resistor (not shown) and the capacitor (not shown) would result in a de/charging of the capacitor (not shown) depending of the resistance of the resistor and thereby on the temperature.

This resulting pulse is subsequently transformed into a square pulse by standard means (not shown) and transmitted into the pulse amplifier 36 and thereby to the microprocessor 6, where the temperature may be determined from the width of the pulse and on the basis of a standard calibration. Subsequently, this temperature measurement may take part of the measurements as is known per se.

It should be noted that, naturally, a temperature measurement can not be performed at the same time as a flow measurement is performed. Inputting the resulting square pulse into the pulse amplifier 36 may be provided by incorporating a logical gate 34, such as an adder, between the phase detector 32 and the pulse amplifier 36. Controlling this gate 34 will decide which signal of that from the temperature measuring means 38 and that from the phase detector 32 is to proceed to the pulse amplifier 36.

The present setup gives a number of advantages especially due to the fact that, as opposed to the above-mentioned, the upstream and downstream measurements may involve the use of different reference signals. By providing two circuits 28 comprising the same inputs, one circuit 28 may be used for determining and generating reference signal for the upstream measurement and the other for the downstream measurement. In the above embodiment, it is described how a 4 MHz signal is divided into a 1 MHz signal. Naturally, four 1 MHz signals are easily derived from the 4 MHz signals in a manner so that the 1 MHz signals have different phases. In the amended embodiment using two reference signals, the synchronizing circuits 28 may further comprise means for not only generating the reference signal having a phase corresponding to that of the received signal generated by the receiving transducer, but they may also comprise means for identifying which of the above e. g. four possible 1 MHz signals obtainable from the 4 MHz signal is actually used as the reference signal for the upstream and the downstream measurements, respectively.

On the basis of the pulses generated by the pulse amplifier 36 and information relating to the phase difference between the two references used, a flow measurement may easily be obtained.

The advantage of this amended embodiment is that the phase difference between the received signals and the reference signals may be smaller, whereby the demands as to the dynamic range of the pulse amplifier 36 may be reduced.

The dynamic range of the detector is limited to the maximum 2n minus the maximum phase difference possible between the signal received from the receiving transducer and the reference signal chosen (in the above example π/2). This range may be extended if the maximum phase difference can be reduced. This maximum phase difference may be reduced to π/4 by inverting the 4 MHz signal transmitted to processor 6, whereby the signal fed into the transmitting transducer is phase shifted π/4. Inverting this signal may be performed by e. g. a simple XOR operation. This reduction of the maximum phase difference may be obtained by, having determined the reference signal, determining the phase difference. If this phase difference is larger than π/4, the 4 MHz signal is inverted, whereafter a new measurement may be performed leading to a lower maximum phase difference and, consequently, a larger dynamic area of the detector.

In an alternative embodiment, the reference signal may be predetermined and not altered during a measurement. Adaption of the phase difference may then be performed solely by adapting the phase of the 1 MHz signal output from the processor 6. Naturally, this signal may be generated in the same manner as it is described performed in the electronics 28 as well as inverted as described above. In this manner, the same advantages as the above-mentioned may be obtained.

Another advantage provided by setups of this type is the fact that the frequency of the ultrasound signals may be changed relatively easily by changing the frequency of the oscillator 4, and, naturally, changing the operation and timing of the microprocessor 6.

A limitation with fixed-frequency flowmeters is the fact that these instruments only with great difficulties are able to measure phase differences larger than 2π. This means that transmission time differences in the two directions larger than 1 µs for 1 MHz signals can typically not be measured, simply because the system is not able to determine whether there is a very small flow or whether the flow is very large. This problem may be avoided by reducing the frequency of the oscillator 4, such as to 2 MHz. This will, using the above- described frequency division by a factor of four in the circuits 28 and 6, cause the transducers 12 and 14 to emit and detect 500 kHz signals. This again means that the system is now able to handle transmission time differences of up to 2 µs. Hence, this changing of the frequency would increase the dynamic area of the whole flowmeter.

In addition, in an alternative embodiment, the upstream and downstream measurement may be performed with different frequencies. This may necessitate the use of different transducers for these measurements. This, however, is not considered a problem, as more than two transducers may easily be provided on the electrical conductor 22 while still obtaining the advantages of the invention.

Another advantage of the setup of the transducers 12 and 14, the electrical conductor 22 and the switches 18 and 20 is the fact that the impedance of the setup is the same when a given switch is opened and the other closed - that is - independently of whether the operative transducer acts as transducer or detector. In this type of setup, any variations in impedance in the transducer are automatically compensated for. Therefore, less stringent demands may be put to the transducer.

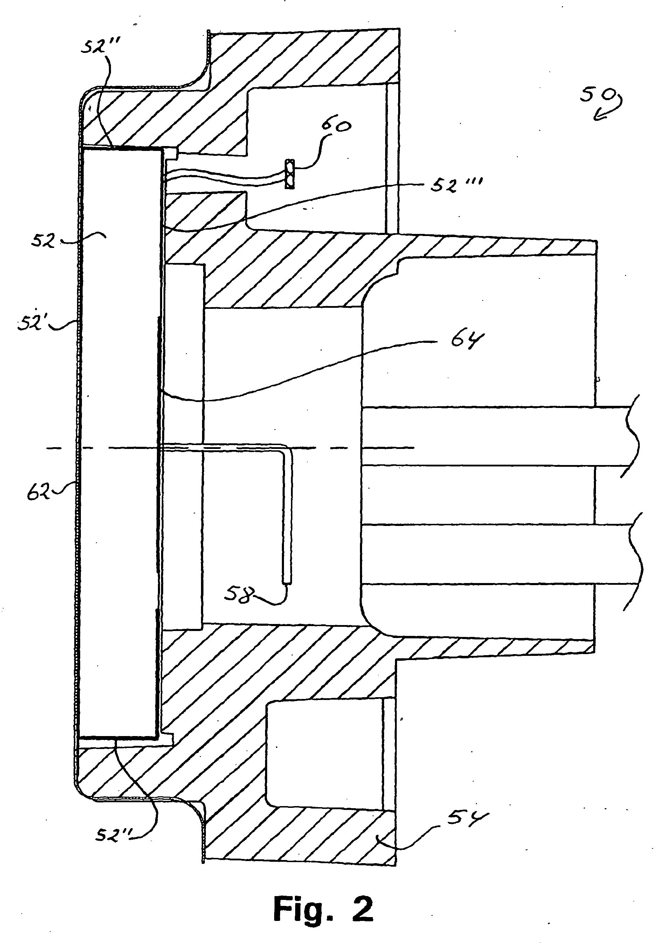

Turning now to Fig. 2, a cross sectional view of a preferred transducer for use in the present system is illustrated.

Providing electrical contacts to the vibrating element, typically a piezo-electric element, of the transducer has long been troublesome in that the element is typically a ceramic material and should be able to vibrate, whereby e. g. soldering is not easily performed. In typical elements of this type, one soldering is to be positioned close to the center of the element. This soldering should be made quite small and still quite strong. Providing a too large soldering will provide a large additional mass to the element and therefore influence the vibration thereof.

As is typical for transducers, the transducer 50 of Fig. 2 has a vibrating element 52, such as a piezo-electric element, held in a transducer housing 54 by a steel membrane and an adhesive layer.

As is typical, the element 52 comprises a first electrode 62 consisting of a metallic layer over the side 52' pointing away from the transducer housing 54, over the peripheral edges 52" of the element 52 and along the peripherally outer parts of the side 52'" of the element 52 pointing towards the transducer housing 54. A second electrode 64 consists of a metallic layer covering the central portions of the side 52"'.

In order to provide electrical contacts from the electronics (such as from the filter 16 in Fig. 1) to the element 52, springs 58 and 60 are provided in the housing 54 and for contacting the first and the second electrodes, respectively.

Using the springs 58 and 60 instead of the typical solder-based interconnections has the advantage that the manufacturing of the transducer 50 is made faster and cheaper. These interconnections may, however, vary with time. However, due to the present setup, this variation is automatically compensated for.

In fact, using the present setup will compensate for different acoustic loads of the transducers such as loads caused by variations in the pressure of the medium, caused by variations in the manner in which the piezoelectric element is held in the transducer, such as variations in tension created by different temperature expansion coefficients of the different materials therein and due to varying temperatures of the medium.

### EXAMPLE an alternative method of determining the phase difference between the first and second electrical signals

Instead of providing one or more signals directly used as the reference signals, an alternative method may be used wherein a high-frequency signal is used for sampling the first and second electrical signals and for generating a sine-like signal to be used in the determination of the phase difference between the first and second electrical signals.

In the present Example, the first and second electrical signals preferably have a frequency of 1 MHz and the high-frequency signal a multiplum of 1 MHz, such as 10-40 MHz, preferably 16 MHz.

Using this high-frequency signal for timing the sampling of a part of the first electrical signal, the information obtained may be used in a purely digital determination of the phase difference between the first electrical signal and a reference signal represented by the high-frequency signal and the starting time of the sampling.

This determination may be performed in a number of manners, such as using a Fourier transformation. A Fourier transformation generates an amplitude spectrum (as a function of frequency) and a phase spectrum (as a function of frequency) of the sampled signal. From the phase spectrum, the phase relating to a frequency of 1 MHz may be derived.

However, as only the 1 MHz information in the sampled signal is of interest (in the present case where the first electrical signal has a frequency of 1 MHz), a DFT (Discrete Fourier Transformation) may be used. This method is computationally lighter, as it may be made to only generate e. g. the 1 MHz phase information and not also a large amount of abundant information (as the Fourier transformation would in this situation).

This DFT will give phase information relating to 1) the sampled signal and 2) a 1 MHz signal represented by the high-frequency signal and the starting time of the sampling. If the high-frequency signal is the same (same frequency) and the starting time is the same from measurement to measurement, the phase differences obtained from the first and the second electrical signals may be subtracted to obtain a phase difference between these signals.

Preferably, in order to ensure that the same starting point is chosen in all measurements, this is defined from the electrical signal to be sampled. Thus, a well-defined portion, such as a portion starting with a local maximum, a local minimum or a zero-crossing, is sampled, stored and used as the basis for the determination of the phase difference.

Having performed this determination using the first and the second electrical signals, the determined phase differences (which relate to approximately the same "reference signal") may be subtracted to obtain the phase difference between the first and the second electrical signals.

Thus, as reference signals, not only standard signals may be used. Also signals of the above type performing the same task may be provided in order to provide a reference against which a phase difference may be determined

In the following, a manner of implementing the preferred DFT is given:

Firstly, this high-frequency signal is used for timing the sampling of a part of the first electrical signal. This sampling is started at a well-defined point of time in relation to the electric signal to be sampled. The sampled values are stored in a first suitable memory.

In a second suitable storage, a number of values, such as 16 values describing a sine-shaped curve, are stored. It is clear that these values, if read continuously from the second storage means in a manner timed by the 16 MHz signal will generate a signal corresponding to a 1 MHz signal.

A phase correlation between the signals stored in the first and the second storage means may be determined by multiplying the values two and two (first value to the first value, the second to the second, etc. etc.), and finally adding the values obtained. The final result will, as the frequencies of the two stored signals are at least approximately the same, relate to the overlap of the signals - and thus the sine to their phase difference - and the amplitude of the signals.

The same operation is performed with the same stored part of the first electrical signal and the signal stored in the first storage means - but this time phase shifted by ½ period. From this operation, a second value is obtained relating to the cosine to the phase shift - and the same amplitude.

The two values obtained may now be used for eliminating the unknown amplitude from the equations and separating and determining the phase shift between the signal represented between the information in the first storage means and the first electrical signal.

A similar operation may be performed in relation to the second electrical signal which may be sampled and processed in the same manner using the same high-frequency signal and the information in the first storage means. From this operation, a second phase difference may be determined between the signal represented between the information in the first storage means and the second electrical signal.

From these two phase differences, the phase difference between the first and the second electrical signals may be determined - without the direct use of one or more reference signal.

This method has the advantage that the analogous electronics typically used for determining the phase differences (which are typically very small) may be replaced by digital electronics providing a better precision.

## Claims

1. A flow meter (2) for measuring a medium flow through a flow passage defined therein and comprising
- at least two ultrasound generating means (12, 14) for generating ultrasound signals based on input signals supplied thereto, for directing such signals in substantially opposite directions along at least part of the flow passage, and for receiving ultrasonic signals having passed said part of the flow passage and generating related electrical signals,
- generator means (4, 6, 8, 10, 16) having an output for outputting input signals for the ultrasound generating means,
- first means for transmitting the input signals from the output of the generator means to the ultrasound generating means,
- deriving means (6) for deriving values or signals based on the related electrical signals, the deriving means having an input arranged to receive the related electrical signals,
- calculating or determining means (6) being adapted to calculate or determine, based on derived values or signals, a flow rate of the medium flowing through the flow passage, and
- second means for transmitting the related electrical signals from the ultrasound generating means to the input of the calculating or determining means,
wherein the first and the second transmitting means comprise:
- at least one first electrical conductor means (22) interconnecting the output of the generator means and the input of the deriving means,
- second electrical conductor means (22) for electrically interconnecting each ultrasound generating means to at least one of the first electrical conductor means, and
- for each ultrasound generating means (12, 14), at least one switching means (18, 20) for enabling or preventing electrical current flow between the at least one first electrical conductor means and the actual ultrasound generating means through the second electrical conductor means electrically interconnecting the actual ultrasound generating means to the at least one of the first electrical conductor means,
**characterized in that**
- the generator means comprise:
- a frequency oscillator (4) for generating the input signals,
- a microprocessor (6) for generating a start/stop signal,
- a NOR gate (8) for switching the input signals output from the frequency oscillator on and off,
- a high-pass filter (10) for removing any DC-component from the input signals output from the NOR gate, and
- a resistor (16) for transmitting the input signals from the high-pass filter to the output, and
- the generator means are adapted to be switched on and off without altering an output impedance thereof.

2. A flow meter according to claim 1, additionally comprising:
- means for generating (28) a first reference signal,
- means for generating (28) a second reference signal,
the deriving means comprising:
- means for deriving (6) a first derived value or signal on the basis of the first reference signal and a first electrical signal generated by the receiving means and being related to an ultrasonic signal, which is based on a first input signal and which is transmitted in a first of the substantially opposite directions along the flow passage, and
- means for deriving (6) a second derived value or signal on the basis of the second reference signal and a second electrical signal generated by the receiving means and being related to an ultrasonic signal, which is based on a second input signal and which is transmitted subsequent to the generation of the first electrical signal and in a second of the substantially opposite directions along the flow path, the second direction being substantially opposite the first direction,
the calculating or determining means being adapted to calculate or determine a flow rate of the medium flowing through the flow passage, based on the first and second derived values or signals and based on a known relationship between the frequencies and/or phases of the first and second references and/or based on a known relationship between the frequencies and/or phases of the first and second input signals.

3. A flow meter according to claim 1 or 2, further comprising means for deriving each of the first and second reference signals and/or each of the first or second input signals on the basis of one or more of the electrical signals generated by the receiving means and related to ultrasonic signals transmitted in one or more of the substantially opposite directions along the flow path.

4. A flow meter according to any of claims 2 or 3, wherein the means for generating the first reference signal are adapted to generate the first reference signal with a frequency being an integer times a frequency of the second reference signal.

5. A flow meter according to any of claims 2 or 3, wherein the means for generating the first and second reference signals are adapted to generate the second reference signal with a frequency being an integer times a frequency of the first reference signal.

6. A flow meter according to any of claims 2 or 3, wherein the means for generating the first and second reference signals are adapted to generate the first and the second reference signals with substantially identical frequencies.

7. A flow meter according to claim 6, wherein the means for generating the first and second reference signals are adapted to generate the first and the second reference signals such that a phase difference between the first and second reference signals is known.

8. A flow meter according to claim 2, wherein the means for generating the first and second reference signals are adapted to generate substantially identical first and second reference signals.

9. A flow meter according to any of claims 2-5, wherein the means for deriving the first and the second derived value or signal are adapted to generate a first derived value or signal relating to a phase difference between the first electrical signal and the first reference signal and a second derived value or signal relating to a phase difference between the second electrical signal and the second reference signal.

10. A flow meter according to claim 9, wherein the calculating or determining means are adapted to calculate or determine a measured flow rate value of the medium in the flow passage by subtracting the first and the second derived values or signals and multiplying a resulting value by a pre-determined parameter.

11. A flow meter according to any of the preceding claims, furthermore comprising means for providing one or more candidate signals having substantially the same frequency or having a number of different frequencies.

12. A flow meter according to claim 11, wherein the means for generating the first reference signal are adapted to generate the first reference signal by selecting one of the candidate signals.

13. A flow meter according to claim 12, wherein the means for generating the first reference signal are adapted to select a generated or received candidate signal having a phase corresponding to that of the first electrical signal.

14. A flow meter according to claim 11, further comprising means for providing a high frequency signal having a frequency substantially higher than that of the first electrical signal, and wherein the means for generating the first reference signal are adapted to generate the first reference signal on the basis of the high frequency signal.

15. A flow meter according to claim 14, wherein the means for providing the high frequency signal are adapted to provide a high frequency signal having a frequency being substantially an integer times a frequency of the first electrical signal, and wherein the means for generating the first reference signal comprise a frequency division means for receiving the high frequency signal and for outputting the first reference signal having a frequency substantially equal to that of the first electrical signal.

16. A flow meter according to claim 14 or 15, wherein the means for generating the input signals, the means for generating the reference signals and the means for providing the high frequency signal are adapted to generate or provide square wave signals alternately shifting between their lower value and their higher value.

17. A method of operating the flow meter of claim 1, the method comprising:
(1)- switching on the generator means,
(2)- opening the second switching means and closing the first switching means so as to generate, using the first ultrasound generating means, a first ultrasonic signal propagating in a first direction along the flow passage,
(3)- switching the generating means off, opening the first switching means, and closing the second switching means,
(4)- receiving, using the second ultrasound generating means, the first ultrasonic signal having passed said part of the flow passage and generating a first related electrical signal,
(5)- transmitting the generated first related electrical signal to the deriving means,
(6)- deriving in the deriving means a first derived value or signal relating to the generated first related electrical signal,
(7)- switching on the generator means,
(8)- opening the first switching means and closing the second switching means so as to generate, using the second ultrasound generating means, a second ultrasonic signal propagating in a second direction along the flow passage, the second direction being substantially opposite the first direction,
(9)- switching the generating means off, opening the second switching means, and closing the first switching means,
(10)- receiving, using the first ultrasound generating means, the second ultrasonic signal having passed said part of the flow passage and generating a second related electrical signal,
(11)- transmitting the generated second related electrical signal to the deriving means,
(12)- deriving in the deriving means a second derived value or signal relating to the generated second related electrical signal,
(13)- calculating or determining, based on the first and second derived values or signals and using the calculating or determining means, a flow rate of the medium flowing through the flow passage.

18. A method according to claim 17, the method further comprising:
- before step (6), generating a first reference signal,
- the deriving step (6) comprising comparing the first electrical signal and the first reference signal and deriving a first derived value or signal from the comparison,
- before step (12), generating a second reference signal,
- the deriving step (12) comprising comparing the second electrical signal and the second reference signal and determining a second derived value or signal from the comparison,
- the calculating or determining step (13) comprising calculating or determining a measured flow rate value of the medium in the flow passage from the first and the second derived values or signals and from a known relation between a frequency and/or phase of the first and second reference signals and/or from a known relation between a frequency and/or phase of the first and second reference signals.

19. A method according to claim 17 or 18, further comprising deriving each of the first and second reference signals and/or each of the first or second input signals on the basis of one or more of the electrical signals generated by the receiving means and related to ultrasonic signals transmitted in one or more of the substantially opposite directions along the flow path.

20. A method according to any of claims 18 or 19, wherein a phase difference between the first and second reference signals is known.

21. A method according to any of claims 18 or 19, wherein the first and second reference signals are substantially identical.

22. A method according to any of claims 17-21, wherein each ultrasound generating means generates ultrasound signals as a response to an input signal and wherein a frequency of the ultrasound signal corresponds to a frequency of the input signal.

23. A method according to any of claims 18-22, wherein the first reference signal is generated having a frequency substantially equal to a frequency of the first electrical signal and wherein the second reference signal is generated having a frequency substantially equal to a frequency of the second electrical signal.

24. A method according to claim 23, wherein the first derived value or signal relates to a phase difference between the first electrical signal and the first reference value and wherein the second derived value or signal relates to a phase difference between the second electrical signal and the second reference value.

25. A method according to any of claims 17-24, wherein one or more candidate signals are provided having substantially the same frequency or a number of different frequencies.

26. A method according to claim 25, wherein the first reference signal is selected as one of the received candidate signals.

27. A method according to claim 26, wherein the selected candidate signal has a phase and a frequency corresponding to those of the first electrical signal.

28. A method according to claim 25, wherein a high frequency signal is provided having a frequency substantially higher than that of the first electrical signal, and wherein the first reference signal is generated on the basis of the high frequency signal.

29. A method according to claim 28, wherein the high frequency signal has a frequency being substantially an integer times that of the first electrical signal, and wherein the first reference signal is generated by frequency division of the high frequency signal.

## Patentansprüche

1. Strömungsmesser (2) zum Messen der Strömung eines Mediums durch eine Strömungspassage, darin definiert und umfassend
- mindestens zwei Ultraschall erzeugende Mittel (12, 14) zur Erzeugung von Ultraschallsignalen basierend auf Eingangssignalen, die dazu zugeführt werden, zum Leiten solcher Signale in im wesentlichen entgegengesetzten Richtungen entlang mindestens einem Teil der Strömungspassage, und zum Empfang von Ultraschallsignalen, die den Teil der Strömungspassage passiert haben und die zugehörige elektrische Signale erzeugen,
- Generatormittel (4, 6, 8, 10, 16) mit einem Ausgang zum Ausgeben von Eingangssignalen für die Ultraschall erzeugenden Mittel,
- erstes Mittel zum Übertragen der Eingangssignale vom Ausgang der Generatormittel zu den Ultraschall erzeugenden Mitteln,
- Ableitungsmittel (6) zum Ableiten von Werten oder Signalen, die auf den zugehörigen elektrischen Signalen basiert sind, wobei die Ableitungsmittel einen Eingang haben, der dafür angeordnet ist, die zugehörigen elektrischen Signale zu empfangen,
- Berechnung- oder Bestimmungsmittel (6), die zum Berechnen oder Bestimmen einer Strömungsgeschwindigkeit des Mediums, das durch die Strömungspassage fließt, eingerichtet sind, basierend auf abgeleiteten Werten oder Signalen, und
- zweites Mittel zum Übertragen der zugehörigen elektrischen Signale von den Ultraschall erzeugenden Mitteln zu dem Eingang der Berechnungs- oder Bestimmungsmitteln,
wobei das erste und zweite Übertragungsmittel folgendes umfasst:
- mindestens einen ersten elektrischen Leiter (22), der den Ausgang der Generatormittel und den Eingang der Ableitungsmittel verbinden,
- einen zweiten elektrischen Leiter (22) zum elektrischen Verbinden von jedem Ultraschall erzeugenden Mittel mit mindestens einem der ersten elektrischen Leiter, und
- für jedes Ultraschall erzeugende Mittel (12, 14), mindestens ein Schaltungsmittel (18, 20) zum Ermöglichen oder Verhindern von elektrischem Stromfluss zwischen dem mindestens einen ersten elektrischen Leiter und dem eigentlichen Ultraschall erzeugenden Mittel durch den zweiten elektrischen Leiter, der das eigentliche Ultraschall erzeugende Mittel mit dem mindestens einen der ersten elektrischen Leiter elektrisch verbindet,
**dadurch gekennzeichnet, dass**
- die Generatormittel umfassen:
- einen Frequenzoszillator (4) zum Erzeugen der Eingangssignale,
- einen Mikroprozessor (6) zum Erzeugen eines Start/Stop-Signals,
- ein NOR-Gatter (8) zum Ein und Ausschalten des Eingangssignals ausgegeben von dem Frequenzoszillator,
- ein Hochpassfilter (10) zum Entfernen jeder Gleichstromkomponente aus den Eingangssignalen ausgegeben von dem NOR-Gatter, und
- einen Widerstand (16) zum Übertragen der Eingangssignale von dem Hochpassfilter an den Ausgang, und
- die Generatormittel dafür eingerichtet sind, ein- und ausgeschaltet zu werden, ohne eine Ausgangsimpedanz davon zu ändern.

2. Strömungsmesser nach Anspruch 1, der zusätzlich folgendes umfasst:
- Mittel zur Erzeugung (28) eines ersten Referenzsignals,
- Mittel zur Erzeugung (28) eines zweiten Referenzsignals, wobei die Ableitungsmittel folgendes umfassen:
- Mittel zur Ableitung (6) eines ersten abgeleiteten Werts oder Signals anhand des ersten Referenzsignals und eines ersten elektrischen Signals, das durch das Empfangsmittel erzeugt ist, und das zu einem Ultraschallsignal gehört, das auf einem ersten Eingangssignal basiert ist, und das in eine erste der im wesentlichen entgegengesetzten Richtungen entlang der Strömungspassage übertragen wird, und
- Mittel zur Ableitung (6) eines zweiten abgeleiteten Werts oder Signals anhand von dem zweiten Referenzsignal und einem zweiten elektrischen Signal, das durch das Empfangsmittel erzeugt ist, und das zu einem Ultraschallsignal gehört, das auf einem zweiten Eingangssignal basiert ist, und das im Anschluss an die Erzeugung des ersten elektrischen Signals und in eine zweite der im wesentlichen entgegengesetzten Richtungen entlang der Strömungspassage übertragen wird, wobei die zweite Richtung im Wesentlichen entgegengesetzt der ersten Richtung ist,
wobei die Berechnungs- oder Bestimmungsmittel dafür eingerichtet sind, eine Strömungsgeschwindigkeit des Mediums, das durch die Strömungspassage fließt, zu berechnen oder bestimmen, basierend auf dem ersten und zweiten abgeleiteten Wert oder Signal und basierend auf einem bekannten Verhältnis zwischen den Frequenzen und/oder Phasen der ersten und zweiten Referenz und/oder basierend auf einem bekannten Verhältnis zwischen den Frequenzen und/oder Phasen des ersten und zweiten Eingangssignals.

3. Strömungsmesser nach Anspruch 1 oder 2, der weiterhin Mittel zur Ableitung des jeweils ersten und zweiten Referenzsignals und/oder der jeweils ersten oder zweiten Eingangssignale umfasst, basierend auf einem oder mehreren der elektrischen Signale, die durch das Empfangsmittel erzeugt sind, und die zu Ultraschallsignalen gehören, die in eine oder mehrere der im wesentlichen entgegengesetzten Richtungen entlang der Strömungspassage übertragen wird.

4. Strömungsmesser nach irgendeinem der Ansprüche 2 oder 3, worin die Mittel zur Erzeugung des ersten Referenzsignals dafür eingerichtet sind, das erste Referenzsignal mit einer Frequenz, die eine ganze Zahl mal eine Frequenz des zweiten Referenzsignals ist, zu erzeugen.

5. Strömungsmesser nach irgendeinem der Ansprüche 2 oder 3, worin die Mittel zur Erzeugung des ersten und zweiten Referenzsignals dafür eingerichtet sind, das zweite Referenzsignal mit einer Frequenz, die eine ganze Zahl mal eine Frequenz des ersten Referenzsignals ist, zu erzeugen.

6. Strömungsmesser nach irgendeinem der Ansprüche 2 oder 3, worin die Mittel zur Erzeugung des ersten und zweiten Referenzsignals dafür eingerichtet sind, das erste und zweite Referenzsignal mit im Wesentlichen identischen Frequenzen zu erzeugen.

7. Strömungsmesser nach Anspruch 6, worin die Mittel zur Erzeugung des ersten und zweiten Referenzsignals dafür eingerichtet sind, das erste und zweite Referenzsignal so zu erzeugen, dass eine Phasendifferenz zwischen dem ersten und zweiten Referenzsignals bekannt ist.

8. Strömungsmesser nach Anspruch 2, worin die Mittel zur Erzeugung des ersten und zweiten Referenzsignals dafür eingerichtet sind, im Wesentlichen identische erste und zweite Referenzsignale zu erzeugen.

9. Strömungsmesser nach irgendeinem der Ansprüche 2-5, worin die Mittel zur Ableitung des ersten und zweiten abgeleiteten Werts oder Signals dafür eingerichtet sind, einen ersten abgeleiteten Wert oder ein erstes abgeleitetes Signal zu erzeugen, der/das mit einer Phasendifferenz zwischen dem ersten elektrischen Signal und dem ersten Referenzsignal, und einem zweiten abgeleiteten Wert oder Signal verbunden ist, der/das mit einer Phasendifferenz zwischen dem zweiten elektrischen Signal und dem zweiten Referenzsignal verbunden ist.

10. Strömungsmesser nach Anspruch 9, worin die Berechnungs- oder Bestimmungsmittel dafür eingerichtet sind, einen gemessenen Strömungsgeschwindigkeitswert des Mediums in der Strömungspassage zu berechnen oder bestimmen durch Subtrahieren des ersten und zweiten abgeleiteten Werts oder Signals und Multiplizieren eines resultierenden Werts mit einem vorbestimmten Parameter.

11. Strömungsmesser nach irgendeinem der vorhergehenden Ansprüche, der weiterhin Mittel zur Bereitstellung eines oder mehrerer Kandidatsignals/-signale mit im Wesentlichen derselben Frequenz oder einer Reihe von verschiedenen Frequenzen umfasst.

12. Strömungsmesser nach Anspruch 11, worin die Mittel zur Erzeugung des ersten Referenzsignals dafür eingerichtet sind, das erste Referenzsignal durch Auswählen von einem der Kandidatsignal zu erzeugen.

13. Strömungsmesser nach Anspruch 12, worin die Mittel zur Erzeugung des ersten Referenzsignals dafür eingerichtet sind, ein erzeugtes oder empfangenes Kandidatsignal mit einer Phase, die der Phase des ersten elektrischen Signals entspricht, zu wählen.

14. Strömungsmesser nach Anspruch 11, der weiterhin Mittel zur Bereitstellung eines Hochfrequenzsignals mit einer Frequenz, die im Wesentlichen höher als diejenige des ersten elektrischen Signals ist, umfasst, und worin die Mittel zur Erzeugung des ersten Referenzsignals dafür eingerichtet sind, das erste Referenzsignal anhand des Hochfrequenzsignals zu erzeugen.

15. Strömungsmesser nach Anspruch 14, worin die Mittel zur Bereitstellung des Hochfrequenzsignals dafür eingerichtet sind, ein Hochfrequenzsignal mit einer Frequenz, die im Wesentlichen eine ganze Zahl mal eine Frequenz des ersten elektrischen Signals ist, bereitzustellen, und worin die Mittel zur Erzeugung des ersten Referenzsignals ein Frequenztrennungsmittel zum Empfang des Hochfrequenzsignals und zum Ausgeben des ersten Referenzsignals mit einer Frequenz, die im Wesentlichen der Frequenz des ersten elektrischen Signals entspricht, umfassen.

16. Strömungsmesser nach Anspruch 14 oder 15, worin die Mittel zur Erzeugung der Eingangssignale, die Mittel zur Erzeugung der Referenzsignale und die Mittel zur Bereitstellung des Hochfrequenzsignals dafür eingerichtet sind, Vierkantwellensignale, die wechselweise zwischen ihrem niedrigeren Wert und ihrem höheren Wort wechseln, zu erzeugen oder bereitzustellen.

17. Verfahren zur Bedienung des Strömungsmessers nach Anspruch 1, das folgendes umfasst:
(1)- Einschalten der Generatormittel,
(2)- Öffnen des zweiten Schaltungsmittels und Schließen des ersten Schaltungsmittels, um, unter Anwendung des ersten Ultraschall erzeugenden Mittels, ein erstes Ultraschallsignal zu erzeugen, das sich in eine erste Richtung entlang der Strömungspassage verbreitet,
(3)- Ausschalten des erzeugenden Mittels, Öffnen des ersten Schaltungsmittels und Schließen des zweiten Schaltungsmittels,
(4)- Empfang des ersten Ultraschallsignals, das den Teil der Strömungspassage passiert hat unter Anwendung des zweiten Ultraschall erzeugenden Mittels, und Erzeugung eines ersten zugehörigen elektrischen Signals,
(5)- Übertragung des erzeugten ersten zugehörigen elektrischen Signals an die Ableitungsmittel,
(6)- Ableiten in den Ableitungsmitteln eines ersten abgeleiteten Werts oder Signals, der/das mit dem erzeugten ersten zugehörigen elektrischen Signal verbunden ist,
(7)- Einschalten der Generatormittel,
(8)- Öffnen des ersten Schaltungsmittels und Schließen des zweiten Schaltungsmittels, um, unter Anwendung des zweiten Ultraschall erzeugenden Mittels, ein zweites Ultraschallsignal zu erzeugen, das sich in eine zweite Richtung entlang der Strömungspassage verbreitet, wobei die zweite Richtung im Wesentlichen entgegengesetzt zu der ersten Richtung ist,
(9)- Ausschalten des erzeugenden Mittels, Öffnen des zweiten Schaltungsmittels und Schließen des ersten Schaltungsmittels,
(10)- Empfang des zweiten Ultraschallsignals, das den Teil der Strömungspassage passiert hat unter Anwendung des ersten Ultraschall erzeugenden Mittels, und Erzeugung eines zweiten zugehörigen elektrischen Signals,
(11)- Übertragung des erzeugten zweiten zugehörigen elektrischen Signals an die Ableitungsmittel,
(12)- Ableiten in den Ableitungsmitteln eines zweiten abgeleiteten Werts oder Signals, der/das mit dem erzeugten zweiten zugehörigen elektrischen Signal verbunden ist,
(13)- Berechnen oder Bestimmen einer Strömungsgeschwindigkeit des Mediums, das durch die Strömungspassage fließt, basierend auf dem ersten und zweiten abgeleiteten Wert oder Signal und unter Anwendung der Berechnungs- oder Bestimmungsmittel.

18. Verfahren nach Anspruch 17, das weiterhin folgendes umfasst:
- vor dem Schritt (6) Erzeugung eines ersten Referenzsignals,
- der Ableitungsschritt (6), der das Vergleichen des ersten elektrischen Signals mit dem ersten Referenzsignal sowie Ableiten eines ersten abgeleiteten Werts oder Signals aus dem Vergleich umfasst,
- vor dem Schritt (12) Erzeugung eines zweiten Referenzsignals,
- der Ableitungsschritt (12), der das Vergleichen des zweiten elektrischen Signals mit dem zweiten Referenzsignal sowie Bestimmen eines zweiten abgeleiteten Werts oder Signals aus dem Vergleich umfasst,
- der Berechnungs- oder Bestimmungsschritt (13), der Berechnen oder Bestimmen eines gemessenen Strömungsgeschwindigkeitwerts des Mediums in der Strömungspassage von dem ersten und zweiten abgeleiteten Wert oder Signal und von einem bekannten Verhältnis zwischen einer Frequenz und/oder Phase des ersten und zweiten Referenzsignals und/oder von einem bekannten Verhältnis zwischen einer Frequenz und/oder Phase des ersten und zweiten Referenzsignals umfasst.

19. Verfahren nach Anspruch 17 oder 18, das weiterhin Ableiten von jedem der ersten und zweiten Referenzsignale und/oder jedem der ersten oder zweiten Eingangssignale umfasst, basierend auf einem oder mehreren der elektrischen Signale, die durch das Empfangsmittel erzeugt sind, und die zu Ultraschallsignalen gehören, die in eine oder mehrere der im wesentlichen entgegengesetzten Richtungen entlang der Strömungspassage übertragen werden.

20. Verfahren nach irgendeinem der Ansprüche 18 oder 19, worin eine Phasendifferenz zwischen dem ersten und zweiten Referenzsignal bekannt ist.

21. Verfahren nach irgendeinem der Ansprüche 18 oder 19, worin das erste und zweite Referenzsignal im Wesentlichen identisch sind.

22. Verfahren nach irgendeinem der Ansprüche 17-21, worin jedes Ultraschall erzeugende Mittel Ultraschallsignale als eine Reaktion auf ein Eingangssignal erzeugen, und worin eine Frequenz des Ultraschallsignals einer Frequenz des Eingangssignals entspricht.

23. Verfahren nach irgendeinem der Ansprüche 18-22, worin das erste Referenzsignal mit einer Frequenz, die im Wesentlichen einer Frequenz des ersten elektrischen Signals entspricht, erzeugt wird, und worin das zweite Referenzsignal mit einer Frequenz, die im Wesentlichen einer Frequenz des zweiten elektrischen Signals entspricht, erzeugt wird.

24. Verfahren nach Anspruch 23, worin der erste abgeleiteten Wert oder das erste abgeleitete Signal eine Phasendifferenz zwischen dem ersten elektrischen Signal und dem ersten Referenzwert betrifft, und worin der zweite abgeleitete Wert oder das zweite abgeleitete Signal eine Phasendifferenz zwischen dem zweiten elektrischen Signal und dem zweiten Referenzwert betrifft.

25. Verfahren nach irgendeinem der Ansprüche 17 24, worin ein oder mehrere Kandidatsignale mit im Wesentlichen derselben Frequenz oder einer Reihe von verschiedenen Frequenzen bereitgestellt werden.

26. Verfahren nach Anspruch 25, worin das erste Referenzsignal als eins von den empfangenen Kandidstsignalen gewählt ist.

27. Verfahren nach Anspruch 26, worin das gewählte Kandidatsignal eine Phase und eine Frequenz hat, die der Phase und der Frequenz des ersten elektrischen Signals entsprechen.

28. Verfahren nach Anspruch 25, worin ein Hochfrequenzsignal mit einer Frequenz, die im Wesentlichen höher als die des ersten elektrischen Signals ist, bereitgestellt wird, und worin das erste Referenzsignal anhand des Hochfrequenzsignals erzeugt wird.

29. Verfahren nach Anspruch 28, worin das Hochfrequenzsignal eine Frequenz hat, die im Wesentlichen eine ganze Zahl mal die des ersten elektrischen Signals ist, und worin das erste Referenzsignal durch die Frequenztrennung des Hochfrequenzsignals erzeugt wird.

## Revendications

1. Débitmètre (2) pour mesurer un débit d'un médium à travers un passage d'écoulement défini là-dedans et comprenant
- au moins deux moyens (12, 14) générant de l'ultrason pour générer des signaux d'ultrason basés sur des signaux d'entrée fournis à ces moyens, pour diriger de tels signaux dans des directions substantiellement opposées le long d'au moins une partie du passage d'écoulement, et pour recevoir des signaux ultrasoniques ayant passé ladite partie du passage d'écoulement et générant des signaux électriques apparentés,
- des moyens générateurs (4, 6, 8, 10, 16) ayant une sortie pour faire sortir des signaux d'entrée pour les moyens générant de l'ultrason,
- des premiers moyens pour transmettre les signaux d'entrée de la sortie des moyens générateurs aux moyens générant de l'ultrason,
- des moyens dérivateurs (6) pour dériver des valeurs ou des signaux basés sur les signaux électriques apparentés, les moyens dérivateurs ayant une entrée arrangée pour recevoir les signaux électriques apparentés,
- des moyens calculateurs ou déterminateurs (6) étant adaptés à calculer ou à déterminer, basé sur des valeurs ou signaux dérivés, une vitesse d'écoulement du médium coulant par le passage d'écoulement, et
- des seconds moyens pour transmettre les signaux électriques apparentés depuis les moyens générant de l'ultrason à l'entrée des moyens calculateurs ou déterminateurs,
dans lequel le premier et le second moyen de transmission comprend:
- au moins un premier moyen électrique conducteur (22) interconnectant la sortie des moyens générateurs et l'entrée des moyens dérivateurs,
- des seconds moyens électriques conducteurs (22) pour interconnecter électriquement chaque moyen générant de l'ultrason à au moins un des premiers moyens électriques conducteurs, et
- pour chaque moyen générant de l'ultrason (12, 14), au moins un moyen interrupteur (18, 20) pour permettre ou prévenir la circulation de courant électrique entre le au moins un premier moyen conducteur électrique et le moyen générant réellement l'ultrason à travers les seconds moyens conducteurs électriques interconnectant électriquement le moyen générant réellement l'ultrason audit au moins un des premiers moyens conducteurs électriques,
**caractérisé en ce que**
- les moyens générateurs comprenant:
- un oscillateur de fréquence (4) pour générer les signaux d'entrée,
- un microprocesseur (6) pour générer un signal de marche/arrêt,
- une porte NON-OU (8) pour mise en marche et arrêt les signaux d'entrée déliverés en sortie par l'oscillateur de fréquence,
- un filter passe-haut (10) pour supprimer toute composante à DC aux signaux d'entrée déliverés en sortie par la porte NON-OU, et
- une résistance pour transmettre les signaux d'entrée par le filter passe-haut a la sortie, et
- les moyens générateurs sont adaptés à être déconnectés et connectés sans altérer une impédance de sortie des ces derniers.

2. Débitmètre selon la revendication 1, comprenant en outre:
- des moyens pour générer (28) un premier signal due référence,
- des moyens pour générer (28) un second signal de référence,
les moyens dérivateurs comprenant:
- des moyens pour dériver (6) une première valeur dérivée ou un premier signal dérivé sur la base du premier signal de référence et un premier signal électrique généré par les moyens récepteurs et étant apparenté à un signal ultrasonique, qui est basé sur un premier signal d'entrée et qui est transmis dans une première direction des directions substantiellement opposées le long du passage d'écoulement, et
- des moyens pour dériver (6) une seconde valeur dérivée ou un second signal dérivé sur la base du second signal de référence et un second signal électrique généré par les moyens récepteurs et étant apparenté à un signal ultrasonique, qui est basé sur un second signal d'entrée et qui est transmis subséquemment à la génération du premier signal électrique, et dans une seconde direction des directions substantiellement opposées le long du passage d'écoulement, la seconde direction étant substantiellement opposée à la première direction, les moyens calculateurs ou déterminateurs étant adaptés à calculer ou à déterminer une vitesse d'écoulement du médium coulant par le passage d'écoulement, basée sur les première et seconde valeurs dérivées ou les premier et second signaux dérivés et basée sur une relation connue entre les fréquences et/ou les phases des première et seconde références et/ou basée sur une relation connue entre les fréquences et/ou les phases des premier et second signaux d'entrée.

3. Débitmètre selon la revendication 1 ou 2, comprenant en outre des moyens pour dériver chacun des premier et second signaux de référence et/ou chacun des premier et second signaux d'entrée sur la base d'un ou plusieurs des signaux électriques générés par les moyens récepteurs et apparentés aux signaux ultrasoniques transmis dans une ou plusieurs des directions substantiellement opposées le long du passage d'écoulement.

4. Débitmètre selon l'une quelconque des revendications 2 ou 3, dans lequel les moyens pour générer le premier signal de référence sont adaptés à générer le premier signal de référence avec une fréquence étant une entière fois une fréquence du second signal de référence.

5. Débitmètre selon l'une quelconque des revendications 2 ou 3, dans lequel les moyens pour générer les premier et second signaux de référence sont adaptés à générer le second signal de référence avec une fréquence étant une entière fois une fréquence du premier signal de référence.

6. Débitmètre selon l'une quelconque des revendications 2 ou 3, dans lequel les moyens pour générer les premier et second signaux de référence sont adaptés à générer les premier et second signaux de référence avec des fréquences substantiellement identiques.

7. Débitmètre selon la revendication 6, dans lequel les moyens pour générer les premier et second signaux de référence sont adaptés à générer les premier et second signaux de référence de telle manière qu'une différence de phase entre les premier et second signaux de référence est connue.

8. Débitmètre selon la revendication 2, dans lequel les moyens pour générer les premier et second signaux de référence sont adaptés à générer des premier et second signaux de référence substantiellement identiques.

9. Débitmètre selon l'une quelconque des revendications 2 à 5, dans lequel les moyens pour dériver les première et seconde valeurs dérivées ou les premier et second signaux dérivés sont adaptés à générer une première valeur dérivée ou un premier signal dérivé relatif à une différence de phase entre le premier signal électrique et le premier signal de référence et une seconde valeur dérivée ou un second signal dérivé relatif à une différence de phase entre le second signal électrique et le second signal de référence.

10. Débitmètre selon la revendication 9, dans lequel les moyens calculateurs ou déterminateurs sont adaptés à calculer ou à déterminer une valeur de vitesse d'écoulement mesurée du médium dans le passage d'écoulement par soustraction des première et seconde valeurs dérivées ou des premier et second signaux dérivés et multiplication d'une valeur résultante par un paramètre prédéterminé.

11. Débitmètre selon l'une quelconque des revendications précédentes, comprenant en outre des moyens pour fournir un ou plusieurs signaux candidats ayant substantiellement la même fréquence ou ayant un nombre de fréquences différentes.

12. Débitmètre selon la revendication 11, dans lequel les moyens pour générer le premier signal de référence sont adaptés à générer le premier signal de référence en sélectionnant un des signaux candidats.

13. Débitmètre selon la revendication 12, dans lequel les moyens pour générer le premier signal de référence sont adaptés à sélectionner un signal candidat généré ou reçu ayant une phase correspondant à celle du premier signal électrique.

14. Débitmètre selon la revendication 11, comprenant en outre des moyens pour fournir un signal de haute fréquence ayant une fréquence substantiellement plus haute que celle du premier signal électrique, et dans lequel les moyens pour générer le premier signal de référence sont adaptés à générer le premier signal de référence sur la base du signal de haute fréquence.

15. Débitmètre selon à revendication 14, dans lequel les moyens pour fournir le signal de haute fréquence sont adaptés à fournir un signal de haute fréquence ayant une fréquence étant substantiellement une entière fois une fréquence du premier signal électrique, et dans lequel les moyens pour générer le premier signal de référence comprennent un moyen de division de fréquence pour recevoir le signal de haute fréquence et pour faire sortir le premier signal de référence ayant une fréquence substantiellement égale à celle du premier signal électrique.

16. Débitmètre selon la revendication 14 ou 15, dans lequel les moyens pour générer les signaux d'entrée, les moyens pour générer les signaux de référence et les moyens pour fournir le signal de haute fréquence sont adaptés à générer ou à fournir des signaux d'onde rectangulaire qui se déplacent en alternance entre leur valeur basse et leur valeur plus élevée.

17. Procédé d'opération du débitmètre selon la revendication 1, ledit procédé comprenant:
(1)- la mise en marche des moyens générateurs,
(2)- l'ouverture du second moyen interrupteur et la fermeture du premier moyen interrupteur pour générer, en utilisant le premier moyen générant de l'ultrason, un premier signal ultrasonique qui se propage dans une première direction le long du passage d'écoulement,
(3)- la déconnexion des moyens générateurs, l'ouverture du premier moyen interrupteur, et la fermeture du second moyen interrupteur,
(4)- la déception, en utilisant le second moyen générant de l'ultrason, du premier signal ultrasonique ayant passé ladite partie du passage d'écoulement et générant un premier signal électrique apparenté,
(5)- la transmission du premier signal électrique généré apparenté aux moyens dérivateurs,
(6)- la dérivation dans les moyens dérivateurs d'une première valeur dérivée ou du premier signal dérivé relatif au premier signal électrique généré apparenté,
(7)- la mise en marche des moyens générateurs,
(8)- l'ouverture du premier moyen interrupteur et la fermeture du second moyen interrupteur pour générer, en utilisant le second moyen générant de l'ultrason, un second signal ultrasonique qui se propage dans une seconde direction le long du passage d'écoulement, la seconde direction étant substantiellement opposée à la première direction,
(9)- la déconnexion des moyens générateurs, l'ouverture du second moyen interrupteur, et la fermeture du premier moyen interrupteur,
(10)- la réception, en utilisant le premier moyen générant de l'ultrason, du second signal ultrasonique ayant passé ladite partie du passage d'écoulement et générant un second signal électrique apparenté,
(11)- la transmission du second signal électrique généré apparenté aux moyens dérivateurs,
(12)- la dérivation dans les moyens dérivateurs d'une seconde valeur dérivée ou du second signal dérivé relatif au second signal électrique généré apparenté,
(13)- le calcul ou la détermination, basée sur les première et seconde valeurs dérivées ou des premier et second signaux dérivés et en utilisant les moyens calculateurs ou déterminateurs, d'une vitesse d'écoulement du médium coulant par le passage d'écoulement.

18. Procédé selon la revendication 17, ledit procédé comprenant en outre:
- avant l'étape (6), la génération d'un premier signal de référence,
- l'étape de dérivation (6) comprenant la comparaison du premier signal électrique et du premier signal de référence et la dérivation d'une première valeur dérivée ou d'un premier signal dérivé de la comparaison,
- avant l'étape (12), la génération d'un second signal de référence,
- l'étape de dérivation (12) comprenant la comparaison du second signal électrique et du second signal de référence et la détermination d'une seconde valeur dérivée ou d'un second signal dérivé de la comparaison,
- l'étape de calcul ou de détermination (13) comprenant le calcul ou la détermination d'une valeur de vitesse d'écoulement mesurée du médium dans le passage d'écoulement à partir des première et seconde valeurs dérivées ou des premier et second signaux dérivés et à partir d'une relation connue entre une fréquence et/ou une phase des premier et second signaux de référence et/ou à partir d'une relation connue entre une fréquence et/ou une phase des premier et second signaux de référence.

19. Débitmètre selon la revendication 17 ou 18, comprenant en outre la dérivation de chacun des premier et second signaux de référence et/ou chacun des premier et second signaux d'entrée sur la base d'un ou plusieurs des signaux électriques générés par les moyens récepteurs et apparentés aux signaux ultrasoniques transmis dans une ou plusieurs des directions substantiellement opposées le long du passage d'écoulement.

20. Procédé selon l'une quelconque des revendications 18 ou 19, dans lequel une différence de phase entre les premier et second signaux de référence est connue.

21. Procédé selon l'une quelconque des revendications 18 ou 19, dans lequel les premier et second signaux de référence sont substantiellement identiques.

22. Procédé selon l'une quelconque des revendications 17 à 21, dans lequel chaque moyen générant de l'ultrason génère des signaux d'ultrason en réponse d'un signal d'entrée, et dans lequel une fréquence du signal d'ultrason correspond à une fréquence du signal d'entrée.

23. Procédé selon l'une quelconque des revendications 18 à 22, dans lequel le premier signal de référence est généré en ayant une fréquence substantiellement égale à une fréquence du premier signal électrique, et dans lequel le second signal de référence est généré en ayant une fréquence substantiellement égale à une fréquence du second signal électrique.

24. Procédé selon la revendication 23, dans lequel la première valeur dérivée ou le premier signal dérivé est relatif à une différence de phase entre le premier signal électrique et la première valeur de référence, et dans lequel la seconde valeur dérivée ou le second signal dérivé est relatif à une différence de phase entre le second signal électrique et la seconde valeur de référence.

25. Procédé selon l'une quelconque des revendications 17 à 24, dans lequel un ou plusieurs signaux candidats sont fournis en ayant substantiellement la même fréquence ou un nombre de fréquences différentes.

26. Procédé selon la revendication 25, dans lequel le premier signal de référence est sélectionné comme un des signaux candidats reçus.

27. Procédé selon la revendication 26, dans lequel le premier signal candidat sélectionné a une phase et une fréquence correspondant à celles du premier signal électrique.

28. Procédé selon la revendication 25, dans lequel un signal de haute fréquence est fourni en ayant une fréquence substantiellement plus haute que celle du premier signal électrique, et dans lequel le premier signal de référence est généré sur la base du signal de haute fréquence.

29. Procédé selon la revendication 28, dans lequel le signal de haute fréquence a une fréquence étant substantiellement uneentière fois celle du premier signal électrique, et dans lequel le premier signal de référence est généré par la division de fréquence du signal de haute fréquence.
